# EUROPÄISCHE PATENTSCHRIFT

(11) **EP 2 126 404 B1**
(45) Veröffentlichungstag und Bekanntmachung des Hinweises auf die Patenterteilung: **19.10.2011**
(21) Anmeldenummer: 08708962.9
(22) Anmeldetag: 13.02.2008
(51) Int. Cl.: F16F 13/26

(54) **HYDRAULISCH DÄMPFENDES LAGER**
HYDRAULICALLY DAMPING BEARING
SUPPORT À AMORTISSEMENT HYDRAULIQUE

(30) Priorität: 16.02.2007 DE 102007007857
(43) Veröffentlichungstag der Anmeldung: 02.12.2009
(73) Patentinhaber: Trelleborg Automotive Germany GmbH, 64747 Breuberg (DE)
(72) Erfinder: GRAEVE, Arndt, 56072 Koblenz (DE); WINTER, Henry, 57629 Steinebach (DE); MEWS, Ulrich, 56203 Höhr-Grenzhausen (DE); EISEL, Eric, 56242 Ellenhausen (DE)
(74) Vertreter: Preissner, Nicolaus
(86) Internationale Anmeldenummer: PCT/EP2008/051750
(87) Internationale Veröffentlichungsnummer: WO 2008/098967

(56) Entgegenhaltungen:
- EP-A- 0 939 243
- DE-A1- 3 805 761
- DE-A1- 10 104 458
- FR-A- 2 868 822
- JP-A- 2005 207 530
- US-A1- 2003 098 533

## Beschreibung

Die vorliegende Erfindung betrifft ein hydraulisch dämpfendes Lager mit einer Arbeitskammer und einer Ausgleichskammer, die mit einer hydraulischen Flüssigkeit gefüllt und durch eine Zwischenplatte voneinander getrennt sind, wobei die Arbeitskammer und die Ausgleichskammer durch einen Überström- und einen Bypasskanal miteinander verbunden sind, wobei der Bypasskanal durch einen Aktor freigebbar oder verschließbar ist.

Ein derartiges Lager ist aus der DE 103 32 081 A1 bekannt. Der zentral in der Zwischenplatte angeordnete Aktor weist eine hohlzylinderförmige Schiebehülse auf, die bei nicht anliegendem Vakuum durch eine Rückstellfeder gegen eine Prallplatte gepresst wird, wodurch eine Öffnung in der Prallplatte verschlossen ist. Durch Anlegen von Vakuum wird die Öffnung in der Prallplatte freigegeben. Der zum Einsatz kommende Aktor weist einen mehrteiligen und somit komplizierten Aufbau auf.

Aus der JP 2005207530 A geht ein hydraulisch dämpfendes Lager hervor, das eine Arbeitskammer und eine Ausgleichskammer aufweist, die beide mit einer hydraulischen Flüssigkeit gefüllt sind. Die Arbeitskammer und die Ausgleichskammer sind durch eine Zwischenplatte voneinander getrennt. Zur Verbindung der Arbeitskammer mit der Ausgleichskammer ist ein Kanal vorgesehen. Der Kanal ist mittels eines schaltbaren Aktors freigebbar oder verschließbar. Die Betätigung des Aktors erfolgt pneumatisch. Der Aktor ist als einteiliges Elastomerteil ausgebildet, der randseitig an einem Metallträger anvulkanisiert ist.

Der Erfindung liegt die Aufgabe zugrunde, ein Lager der eingangs genannten Art anzugeben, bei dem der Aktor eine hohe Vorspannung hat und bei dem eine zur Betätigung des Aktors zusätzlich eingebrachte Vakuumkammer entfällt.

Zur Lösung dieser Aufgabe wird ein hydraulisch dämpfendes Lager mit den Merkmalen des Anspruchs 1 vorgeschlagen.

Bei dem erfindungsgemäßen Lager kann der Aktor kostengünstig hergestellt werden, da dieser als einteiliges Elastomerteil ausgebildet ist. Weiterhin zeichnet sich ein derartiger Aktor durch einen geringen Verschleiß und somit durch eine hohe Standzeit aus. Weiterhin ist das einteilige Elastomerteil selbstdämpfend und verhindert somit Eigenresonanzen, wodurch eine Geräuschbildung deutlich verringert wird. Dadurch dass der Bypasskanal in Radialrichtung derart versetzt zum Aktor angeordnet ist, wird das Stellglied seitlich beaufschlagt. Somit ist die Arbeitsrichtung des Aktors senkrecht zur Strömungsrichtung. Hierdurch können die Schließkräfte des Aktors relativ gering gehalten werden.

Vorteilhafte Ausgestaltungen sind Gegenstand der Unteransprüche.

Vorteilhaft ist der Aktor rotationssymmetrisch ausgebildet. Hierdurch wird eine sehr gute Abdichtung ohne besondere Maßnahmen erzielt.

Das Stellglied des Aktors ist vorteilhaft zylinderförmig ausgebildet.

In weiterer Ausgestaltung ist vorgesehen, dass im Befestigungsbereich ein Verstärkungselement, insbesondere aus Metall, eingebracht ist.

Vorteilhaft ist die Vakuumkammer mit einer steuerbaren Vakuumquelle verbindbar.

Bei einer weiteren Ausgestaltung ist in der Zwischenplatte eine Entkopplungskammer vorgesehen, in der eine Entkopplungsmembran aufgenommen ist.

Um eine Schaltbarkeit der Entkopplungsmembran zu erzielen, ist der Entkopplungsmembran eine Vakuumkammer zugeordnet, die mit einer steuerbaren Vakuumquelle verbunden ist.

Bei einer vorteilhaften Ausführungsform ist vorgesehen, dass der Aktor und die Entkopplungsmembran gleichzeitig schaltbar sind.

Vorteilhaft ist die Öffnung der Prallplatte mit einem Gitter versehen. Hierdurch wird ein Eintritt des Stellglieds des Aktors in die Öffnung der Prallplatte vermieden.

Nachfolgend wird die Erfindung anhand von Ausführungsbeispielen näher erläutert, die in den Zeichnungen in schematischer Weise dargestellt sind. Hierbei zeigen:
Fig. 1 einen Vertikalschnitt durch eine erste Ausführungsform des erfindungsgemäßen Lagers in einer ersten Schaltstellung;
Fig. 2 eine Vertikalschnitt durch die Zwischenplatte des in Fig. 1 dargestellten Lagers in einer zweiten Schaltstellung des Lagers;
Fig. 3 ein Diagramm, das die resultierenden Kennlinien des Lagers in den beiden Schaltstellungen zeigt;
Fig. 4 einen Vertikalschnitt durch die Zwischenplatte einer zweiten Ausführungsform des erfindungsgemäßen Lagers und
Fig. 5 eine perspektivische Einzeldarstellung des erfindungsgemäßen Aktors.

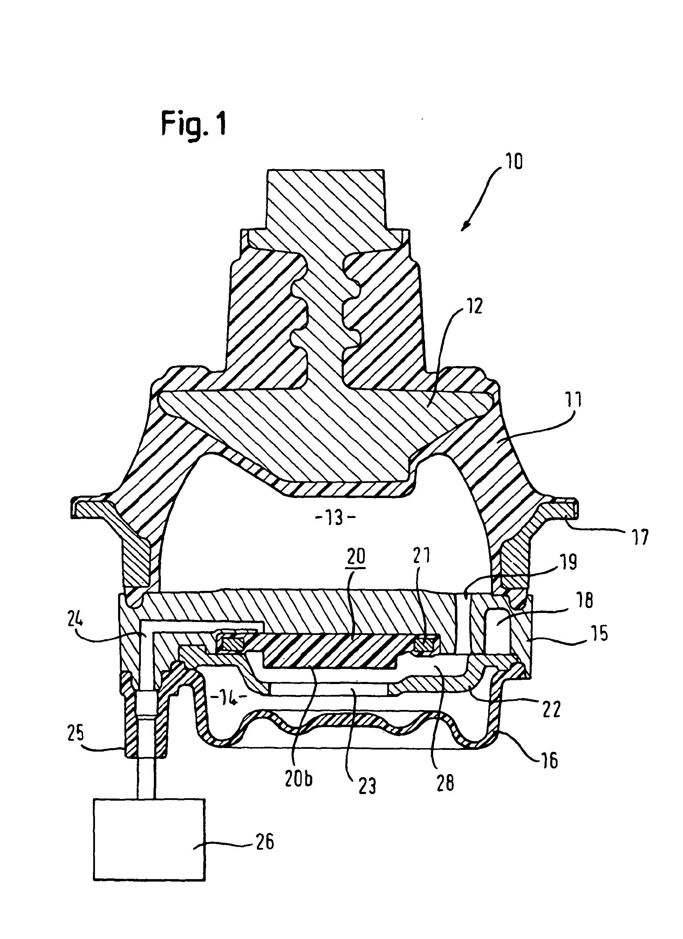

Fig. 1 zeigt ein hydraulisch dämpfendes Lager 10 das als Motorlager bei Kraftfahrzeugen zum Einsatz kommt. Das Lager 10 weist eine Tragfeder 11 aus elastomeren Material auf, die einen motorseitigen Lagerkern 12 abstützt. Die Tragerfeder 11 stützt sich randseitig an einem Gehäuse 17 ab, das das Lager 10 am Außenumfang begrenzt. Die Tragfeder 11 begrenzt eine Arbeitskammer 13, die von einer Ausgleichskammer 14 durch eine Zwischenplatte 15 getrennt ist. Die Ausgleichskammer 14 wird von einer nachgiebigen Ausgleichskappe 16 aus einem elastomeren Material begrenzt.

Die Arbeitskammer 13 und die Ausgleichskammer 14 sind mit einer hydraulischen Flüssigkeit gefüllt. In der Zwischenplatte 15 ist ein die Arbeitskammer 13 und die Ausgleichskammer 14 verbindender Überströmkanal 18 vorgesehen, der spiralförmig verläuft. Weiterhin sind die Arbeitskammer 13 und die Ausgleichskammer 14 durch einen vertikal verlaufenden Bypasskanal 19 verbunden, der mehrere in Umfangsrichtung versetzt angeordnete Segmente aufweisen kann.

An der Zwischenplatte 15 ist eine Prallplatte 22 vorgesehen, die eine Hohlkammer 28 begrenzt. In der Hohlkammer 28 ist ein Aktor 20 aufgenommen, der an seinem randseitigen Befestigungsbereich 20a zwischen der Zwischenplatte 15 und der Prallplatte 22 festgelegt ist. In der Prallplatte 22 ist eine Öffnung 23 vorgesehen, die mittels des schaltbaren Aktors freigebbar oder verschließbar ist.

Die Steuerung des Aktors 20 erfolgt pneumatisch über Vakuumleitung 24, die in einen Vakuumanschluss 25 mündet. Der Vakuumanschluss 25 ist an die Ausgleichskappe 16 angeformt. Der Vakuumanschluss 25 ist mit einer Vakuumquelle 26 verbunden.

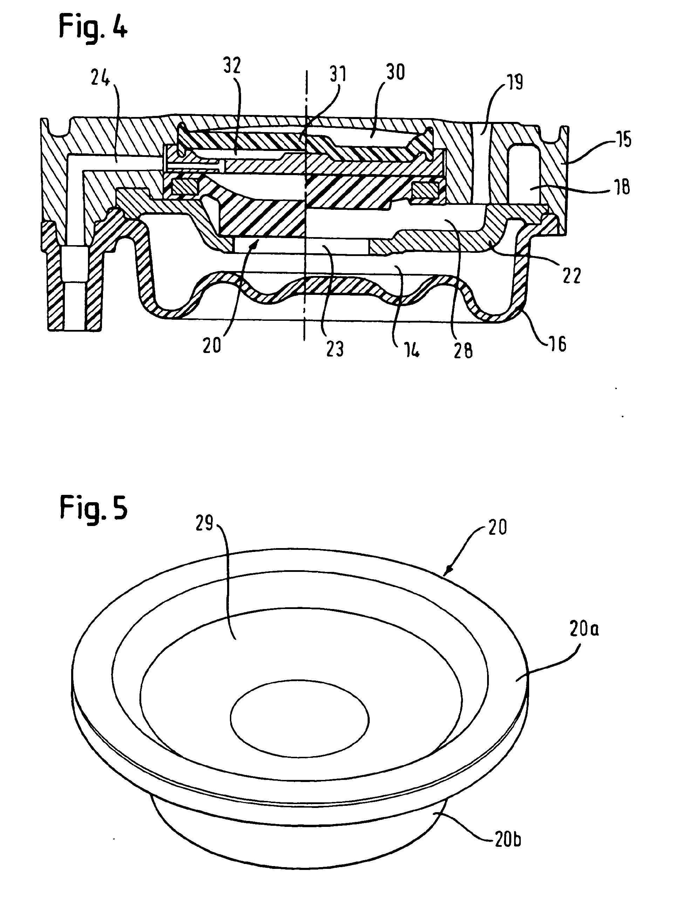

Fig. 5 zeigt den Aktor 20 in einer perspektivischen Einzelansicht. Der Aktor 20 ist als einteiliges und rotationssymmetrisches Elastomerteil ausgebildet. Randseitig ist ein Befestigungsbereich 20a vorgesehen, in dem ein Verstärkungselement 21 aus Metall einvulkanisiert ist. Ein zylinderförmiges Stellglied 20b ist über einen flexiblen Verbindungsbereich 20c mit dem Befestigungsbereich 20a verbunden. Der Aktor 20 weist eine eingeformte Vertiefung 29 auf, die eine Bewegung des Stellgliedes 20b in der Vertikalrichtung zulässt.

Der Aktor 20 kann in einfacher Weise als vulkanisiertes Gummiteil hergestellt werden. Weiterhin zeichnet sich der Aktor 20 durch einen geringen Verschleiß und somit einer hoher Standzeit aus, wozu auch die geringen Stellwege beitragen.

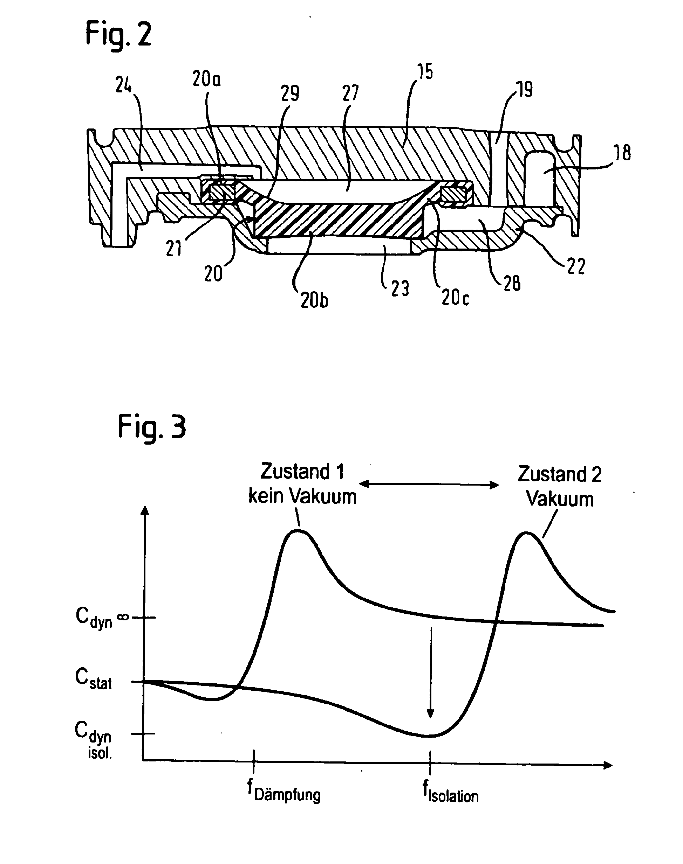

Fig. 2 zeigt den Aktor 20 in seiner Schließstellung. In dieser Schaltposition, die im Fahrzustand vorliegt, liegt kein Vakuum an. Durch diese Auslegung wird auch bei Ausfall der Vakuumquelle eine sichere Funktion erzielt. Der Aktor 20 ist mit Vorspannung zwischen der Prallplatte 22 und der Zwischenplatte 15 aufgenommen. Das Stellglied 20b des Aktors 20 liegt somit mit Vorspannung an der Prallplatte 22 an und verschließt die Öffnung 23. Ein in der Öffnung 23 angeordnetes Gitter 33 stützt das Stellglied 20b ab und verhindert ein Eintreten des Stellglied 20b in die Öffnung 23.

Wie aus Fig. 1 und 2 ersichtlich ist, ist der Bypasskanal 19 in Radialrichtung derart versetzt zum Aktor 20 angeordnet, dass das Stellglied 20b des Aktors 20 seitlich beaufschlagt wird. Somit ist die Arbeitsrichtung des Aktors 20 senkrecht zur Anströmrichtung.

Die in den Aktor 20 eingeformte Vertiefung 29 bildet mit der Zwischenplatte 15 eine Vakuumkammer 27 aus. Die Vakuumkammer 27 steht mit der Vakuumleitung 24 in Verbindung.

Fig. 1 zeigt den Aktor 20 in seiner Offenstellung, die durch Anlegen von Vakuum an der Vakuumkammer 27 erreicht wird. Hierbei wird das Stellglied 20b des Aktors 20 vertikal nach oben versetzt. Dadurch wird die in der Prallplatte 22 vorgesehene Öffnung 23 für den Bypasskanal 19 freigegeben. Somit ist in dieser Schaltstellung des Aktors 20 die Arbeitskammer 13 sowohl über den Überströmkanal 18 als auch über den Bypasskanal 19 mit der Ausgleichskammer 14 verbunden.

Fig. 3 zeigt die Kennlinien des Lagers gem. Fig. 1 und 2 in den beiden Schaltstellungen des Aktors 20. Hieraus ist ersichtlich, dass durch Zuschalten des Bypasskanals 19, wie dies in Fig. 1 dargestellt ist, die dynamische Steifigkeit (C_{dyn}) reduziert werden kann. Das Maximum der dynamischen Steifigkeit (C_{dyn}) wird in höhere Frequenzbereiche verschoben.

Fig. 4 zeigt eine zweite Ausführungsform, zu deren Beschreibung die bereits eingeführten Bezugszeichen für gleiche oder funktionsgleiche Teile verwendet wird.

Bei dem dargestellten Lager weist die Zwischenplatte eine Entkopplungskammer 30 auf, in der eine schaltbare Entkopplungsmembran 31 aufgenommen ist. Die Entkopplungsmembran 31 besteht aus einem elastomeren Material und ist an ihrem Außenumfang an der Zwischenplatte 15 festgelegt. Der Entkopplungsmembran 31 ist eine Vakuumkammer 32 zugeordnet, die mit der Vakuumleitung 24 verbunden ist.

Fig. 4 zeigt in der linken Hälfte die Schaltstellung des Aktors 20 und der Entkopplungsmembran 31 bei nicht angelegtem Vakuum. In dieser Schaltstellung verschließt der Aktor 20 die in der Prallplatte 22 vorgesehene Öffnung 23. Somit ist der Bypasskanal 19 verschlossen. Die Entkopplungsmembran 31 ist freibeweglich, wodurch die Entkopplung wirksam ist. Mit Anlegen von Vakuum über die Vakuumleitung 24 wird der Aktor 20 und die Entkopplungsmembran 31 in die in der rechten Hälfte dargestellten Schaltpositionen verfahren. Hierbei liegt der Aktor an der Unterseite der Zwischenplatte 15 an. Somit wird der Bypasskanal 19 freigegeben. Die Entkopplungsmembran 31 wird durch das Anlegen von Vakuum an den Boden der Entkopplungskammer 30 angelegt. Somit ist die Entkopplung abgeschaltet.

### Bezugszeichenliste

- 10: Lager
- 11: Tragfeder
- 12: Lagerkern
- 13: Arbeitskammer
- 14: Ausgleichskammer
- 15: Zwischenplatte
- 16: Ausgleichskappe
- 17: Lagergehäuse
- 18: Überströmkanal
- 19: Bypasskanal
- 20: Aktor
- 20a: Befestigungsbereich
- 20b: Stellglied
- 20c: Verbindungsbereich
- 21: Verstärkungselement
- 22: Prallplatte
- 23: Öffnung
- 24: Vakuumleitung
- 25: Vakuumanschluss
- 26: Vakuumquelle
- 27: Vakuumkammer
- 28: Hohlkammer
- 29: Vertiefung
- 30: Entkopplungskammer
- 31: Entkopplungsmembran
- 32: Vakuumkammer
- 33: Gitter

## Patentansprüche

1. Hydraulisch dämpfendes Lager (10) mit einer Arbeitskammer (13) und einer Ausgleichskammer (14), die mit einer hydraulischen Flüssigkeit gefüllt und durch eine Zwischenplatte (15) voneinander getrennt sind, wobei die Arbeitskammer (13) und die Ausgleichskammer (14) durch einen Überströmkanal (18) und eine Bypasskanal (19) miteinander verbunden sind, wobei der Bypasskanal (19) durch einen Aktor (20) freigebbar oder verschließbar ist, wobei der Aktor (20) ein Stellglied (20b) aufweist, das im eingebauten Zustand mit Vorspannung an einer Prallplatte (22) anliegt, die eine Öffnung (23) zur Ausgleichskammer (14) aufweist, wobei der Bypasskanal (19) in Radialrichtung derart versetzt zum Aktor (20) angeordnet ist, dass das Stellglied (20b) seitlich beaufschlagt wird, und wobei der Aktor (20) als einteiliges Elastomerteil ausgebildet ist, das einen randseitigen Befestigungsbereich (20a) und ein Stellglied (20b) aufweist, das über einen flexiblen Verbindungsbereich (20c) mit dem Befestigungsbereich (20a) verbunden ist, **dadurch gekennzeichnet, dass** die Vorspannung des Aktors (20) aufgrund der Formgebung und Flexibilität des Verbindungsbereichs (20c) des Aktors (20) erzielt wird, und dass die Oberseite des Aktors (20) eine eingeformte Vertiefung (29) aufweist, die im eingebauten Zustand des Aktors (20) eine Vakuumkammer (27) ausbildet.

2. Hydraulisch dämpfendes Lager (10) nach einem der vorangehenden Ansprüche, **dadurch gekennzeichnet, dass** der Aktor (20) rotationssymmetrisch ausgebildet ist.

3. Hydraulisch dämpfendes Lager (10) nach einem der vorangehenden Ansprüche, **dadurch gekennzeichnet, dass** das Stellglied (20b) zylinderförmig ausgebildet ist.

4. Hydraulisch dämpfendes Lager (10) nach einem der vorangehenden Ansprüche, **dadurch gekennzeichnet, dass** im Befestigungsbereich (20a) ein Verstärkungselement (21), insbesondere aus Metall, eingebracht ist.

5. Hydraulisch dämpfendes Lager (10) nach einem der vorangehenden Ansprüche, **dadurch gekennzeichnet, dass** die Vakuumkammer (27) mit einer steuerbaren Vakuumquelle (26) verbindbar ist.

6. Hydraulisch dämpfendes Lager (10) nach einem der vorangehenden Ansprüche, **dadurch gekennzeichnet, dass** in der Zwischenplatte (15) eine Entkopplungskammer (30) vorgesehen ist, in der eine Entkopplungsmembran (31) aufgenommen ist.

7. Hydraulisch dämpfendes Lager (10) nach einem der vorangehenden Ansprüche, **dadurch gekennzeichnet, dass** der Entkopplungsmembran (31) eine Vakuumkammer (32) zugeordnet ist, die mit einer steuerbaren Vakuumquelle (26) verbindbar ist.

8. Hydraulisch dämpfendes Lager (10) nach einem der vorangehenden Ansprüche, **dadurch gekennzeichnet, dass** der Aktor (20) und Entkopplungsmembran (31) gleichzeitig schaltbar sind.

9. Hydraulisch dämpfendes Lager (10) nach einem der vorangehenden Ansprüche, **dadurch gekennzeichnet, dass** die Öffnung (23) der Prallplatte (22) mit einem Gitter (33) versehen ist.

## Claims

1. A hydraulically damping mount (10), comprising a working chamber (13) and a compensation chamber (14), which are filled with a hydraulic liquid and separated from each other by a separating plate (15), wherein the working chamber (13) and the compensation chamber (14) are connected to each other by a transfer passage (18) and a by-pass channel (19), wherein the bypass channel (19) is openable or closable by an actuator (20), wherein the actuator (20) comprises an actuating member (20b) which, in the installed state, is biased against a baffle plate (22) having an opening (23) toward the compensation chamber (14), wherein the bypass channel (19) is offset with respect to the actuator (20) in the radial direction in such a manner that the actuating member (20b) has a lateral force applied to it, and wherein the actuator (20) is formed as a one-piece elastomeric part having a peripheral mounting area (20a) and an actuating member (20b) connected to the mounting area (20a) via a flexible connection area (20c), **characterised in that** the biasing force of the actuator (20) is achieved on the basis of the shape and flexibility of the connection area (20c) of the actuator (20), and **in that** the top surface of the actuator (20) comprises an integrally formed recess (29) which, in the installed state of the actuator (20), forms a vacuum chamber (27).

2. The hydraulically damping mount (10) according to any one of the preceding claims, **characterised in that** the actuator (20) has a rotation-symmetrical configuration.

3. The hydraulically damping mount (10) according to any one of the preceding claims, **characterised in that** the actuating member (20b) has a cylindrical configuration.

4. The hydraulically damping mount (10) according to any one of the preceding claims, **characterised in that** a reinforcing element (21), in particular of metal, is inserted in the mounting area (20a).

5. The hydraulically damping mount (10) according to any one of the preceding claims, **characterised in that** the vacuum chamber (27) is connectable to a controllable vacuum source (26).

6. The hydraulically damping mount (10) according to any one of the preceding claims, **characterised in that**, in the separating plate (15), a decoupling chamber (30) is provided, in which a decoupling membrane (31) is accommodated.

7. The hydraulically damping mount (10) according to any one of the preceding claims, **characterised in that** the decoupling membrane (31) has a vacuum chamber (32) associated with it, which is connectable to a controllable vacuum source (26).

8. The hydraulically damping mount (10) according to any one of the preceding claims, **characterised in that** the actuator (20) and the decoupling membrane (31) are simultaneously switchable.

9. The hydraulically damping mount (10) according to any one of the preceding claims, **characterised in that** the opening (23) in the baffle plate (22) is provided with a grate (33).

## Revendications

1. Support à amortissement hydraulique (10) comprenant une chambre de travail (13) et une chambre de compensation (14), qui sont remplies avec un liquide hydraulique et qui sont séparées l'une de l'autre par une plaque intermédiaire (15), telles que la chambre de travail (13) et la chambre de compensation (14) sont reliées l'une à l'autre via un canal de déversement (18) et via un canal de by-pass (19), le canal de by-pass (19) pouvant être dégagé ou obturé par un actionneur (20), ledit actionneur (20) comprenant un organe de positionnement (20b) qui, dans l'état monté, est appliqué avec précontrainte contre une plaque à impact (22) laquelle présente une ouverture (23) vers la chambre de compensation (14) et le canal de by-pass (19) est agencé de manière décalée en direction radiale par rapport à l'actionneur (20) de telle façon que l'organe de positionnement (20b) est sollicité latéralement, et dans lequel l'actionneur (20) est réalisé sous forme de pièce en élastomère d'un seul tenant qui comporte une zone de fixation (20a) du côté bordure et un organe de positionnement (20b) qui est relié à la zone de fixation (20a) via une zone de liaison flexible (20c), **caractérisé en ce que** la précontrainte de l'actionneur (20) est obtenue en raison de la conformation et de la flexibilité de la zone de liaison (20c) de l'actionneur (20), et **en ce que** la face supérieure de l'actionneur (20) comporte un renfoncement (29) conformé qui constitue une chambre à vide (27) dans l'état monté de l'actionneur (20).

2. Support à amortissement hydraulique (10) selon la revendication précédente, **caractérisé en ce que** l'actionneur (20) est réalisé avec symétrie de révolution.

3. Support à amortissement hydraulique (10) selon l'une des revendications précédentes, **caractérisé en ce que** l'organe de positionnement (20b) est réalisé sous forme cylindrique.

4. Support à amortissement hydraulique (10) selon l'une des revendications précédentes, **caractérisé en ce qu'**un élément de renforcement (21), en particulier en métal, est intégré dans la zone de fixation (20a).

5. Support à amortissement hydraulique (10) selon l'une des revendications précédentes, **caractérisé en ce que** la chambre à vide (27) peut être reliée à une source de vide (26) commandée.

6. Support à amortissement hydraulique (10) selon l'une des revendications précédentes, **caractérisé en ce qu'**il est prévu une chambre de découplage (30) dans la plaque intermédiaire (15), chambre dans laquelle est reçue une membrane de découplage (31).

7. Support à amortissement hydraulique (10) selon l'une des revendications précédentes, **caractérisé en ce qu'**une chambre à vide (32) est associée à la membrane de découplage (31), chambre qui peut être reliée à une source de vide (26) commandée.

8. Support à amortissement hydraulique (10) selon l'une des revendications précédentes, **caractérisé en ce que** l'actionneur (20) et la membrane de découplage (31) peuvent être déclenchés simultanément.

9. Support à amortissement hydraulique (10) selon l'une des revendications précédentes, **caractérisé en ce que** l'ouverture (23) de la plaque à impact (20) est pourvue d'un grillage (33).
